Europäisches Patentamt

European Patent Office

Office européen des brevets

(11) Publication number: **0 511 715 A1**

# EUROPEAN PATENT APPLICATION

(21) Application number: **92201198.6**

(22) Date of filing: **29.04.92**

(51) Int. Cl.5: **A01G 9/14**

(30) Priority: **29.04.91 NL 9100736**

(43) Date of publication of application:
**04.11.92 Bulletin 92/45**

(84) Designated Contracting States:
**BE DE FR NL**

(71) Applicant: **Machinefabriek Gebr. Flier B.V.**
**Zuideinde 12078**
**NL-2991 LK Barendrecht(NL)**

(72) Inventor: **Flier, Lambert**
**3e Barendrechtseweg 416**
**NL-2992 SN Barendrecht(NL)**

(74) Representative: **Smulders, Theodorus A.H.J.,**
**Ir. et al**
**Vereenigde Octrooibureaux Nieuwe Parklaan**
**97**
**NL-2587 BN 's-Gravenhage(NL)**

(54) **Apparatus for the mechanical handling of nursery cases in a greenhouse.**

(57) An apparatus for mechanically handling nursery cases (3) in a greenhouse comprises at least one set-out/pick-up carriage (6) movable over one or more tracks, for instance rails (5), under a bay (1) of a greenhouse. The carriage comprises at least one stacking/unstacking machine (13) and a lifting frame (11) which is operative over a distance to be chosen equal to the full width or half the width (B) of a bay. The lifting frame (11) is adapted to place cases on, and remove cases from, a cross conveyor (12) which is mounted on the set-out/pick-up carriage (6) and has a length substantially corresponding to the length of the lifting frame. The cross conveyor (12) is adapted to transport cases from and to the, or each, stacking/unstacking machine (13).

FIG. 1

This invention relates to an apparatus for the mechanical handling of nursery cases or other forms of cases or nursery trays.

The mechanical handling involved here concerns depositing (setting out) cases with soil blocks or other forms of nursery stock side by side and behind each other on the floor of a greenhouse. Although the system is also operative under different conditions, it will be described with reference to setting out cases containing soil blocks with plants that have germinated in a climate-controlled cell (for two or three days). These cases are supplied in stacks and set out side by side on the floor of a greenhouse and the plants are allowed to grow under the climatic conditions maintained in the greenhouse. When the plants are full grown, the cases must be picked up again and stacked for eventual delivery to buyers. Greenhouses where such processes take place exist in various dimensions and designs. One current type of greenhouse consists of a succession of so-called bays, i.e., roof sections which are laterally supported by colums in the greenhouse. The width of the bays can for instance be 12.80 m, 9.60 m or 6.40 m.

In practice, typically, case pick-up and set-out machines are used of such a working width that they can pick up two or three cases simultaneously, depending on whether the cases abut each other along their short or long sides. For supplying and removing stacks of cases, such a machine cooperates with a forklift truck comprising clamps which can laterally grip two or three stacks arranged side by side.

Drawbacks of this known machine are that the effective working width is limited, that the machine can commence picking up cases only at the edges of a field of cases and a given lot of cases located in the centre of a field is not accessible to the machine, and that after picking up and delivering a plurality of rows of cases, the machine must be driven back empty to pick up the adjacent rows. Further, a separate forklift truck is necessary, which rides to and fro for supplying stacks of cases to be set out. In order to prevent the forklift truck damaging the greenhouse floor so that the cases cannot be arranged flat on the ground anymore, the greenhouse floor must be so designed or treated that it can bear the weight of the forklift truck without risk of damage.

Another known technique concerns a lifting frame adapted to grip two or three rows of cases simultaneously across the entire width of the bay and place them on an intermediate platform. From the platform the cases are transferred to a long discharge conveyor, which conveys the cases in single file to a stacker, etc. A disadvantage of this technique is the limited discharge capacity of the long conveyor.

A disadvantage of the two above-mentioned known techniques is that they are not lot-selective, i.e., if different lots are arranged on the floor of a greenhouse, either stacks of cases with different crops are formed or (in the second technique) the lifting frame can be filled only partly with cases from one lot and so cannot operate at full capacity.

The object of this invention is to provide a nursery case handling system in which the disadvantages of the two techniques mentioned are avoided.

In particular, the object of the invention is to provide an apparatus which can be operative across the entire width or half the width of a bay, which can ride over a field of cases and thus can start at any desired row within a field, while the idle time of the machine is limited to a minimum and a forklift truck riding in the field is not necessary.

To that end, an apparatus for the mechanical handling of nursery cases in a greenhouse comprises at least one set-out/pick-up carriage which is movable over one or more tracks, for instance rails, under a bay of a greenhouse, this carriage comprising at least one stacking/unstacking machine and a lifting frame which is operative over a distance to be chosen equal to the full width or half the width of a bay, this lifting frame being adapted to place cases on, and remove cases from, a cross conveyor which is mounted on the set-out/pick-up carriage and has a length substantially corresponding to the length of the lifting frame, the cross conveyor being adapted to transport cases from and to the, or each, stacking/unstacking machine.

The set-out/pick-up carriage of the apparatus, starting at a random row of a field and moving in a first (longitudinal) direction of the field, can pick up a row of cases and place them on a cross conveyor laid out in a second (transverse) direction. These cases are then carried by the cross conveyor to the, or each, stacking/unstacking machine and stacked there. As soon as a desired number of cases have been picked up, with one row located on the cross conveyor and one row hanging in the lifting frame, the machine can be driven along the longitudinal rails to a transverse gangway in the greenhouse, where the stacks can be discharged. As the machine rides, the cases on the conveyor can be stacked and the cases which hang in the lifting frame can be placed on the cross conveyor and subsequently stacked.

Therefore, no service time of the set-out/pick-up carriage is lost and the system is eminently suitable for very large greenhouses with field areas of 7 hectares, for instance.

In further elaboration of the invention, it is possible, particularly in the case of large bay widths, to provide three tracks, for instance rails, below each greenhouse bay, while at the central track the set-out/pick-up carriage comprises two stacking/unstacking machines which are supplied by the cross conveyor or conveyors, the lateral tracks serving for the support of ends of the cross conveyors and of the lifting frame.

Although it is possible to unload the stacks thus formed from the set-out/pick-up carriage at the above-mentioned transverse gangway by hand or with a lift truck, it is recommended, in view of automation and capacity increase, and in accordance with the invention, to use a rail system for a trolley at at least one transverse gangway, each set-out/pick-up carriage and the trolley comprising conveyors for transferring and receiving stacks of cases. This enables the set-out/pick-up carriage to rapidly discharge the stacks formed thereon and be driven back into the field, while the trolley removes the load of stacked cases.

Further, according to the invention, use can be made of a stationary transfer station which comprises a device for moving the rows of stacks towards each other so that they can be picked up by a transport clamp, which is known as such, and the transfer station can connect to a discharge transport device comprising trolleys which are movable over rails and are designed and equipped in substantially the same manner as the trolley operative directly behind the set-out/pick-up carriage. The stacks can thus be formed and discharged in a fully automatic manner.

It will be clear that the apparatus operates in a similar manner for setting out in the fields the cases which have been supplied by trolleys on the transverse gangway.

To further elucidate the invention, one embodiment of the apparatus will now be discussed with reference to the accompanying drawings, in which:

Fig. 1 is a top plan view of a greenhouse;
Fig. 2 is a top plan view of a set-out/pick-up carriage according to the invention;

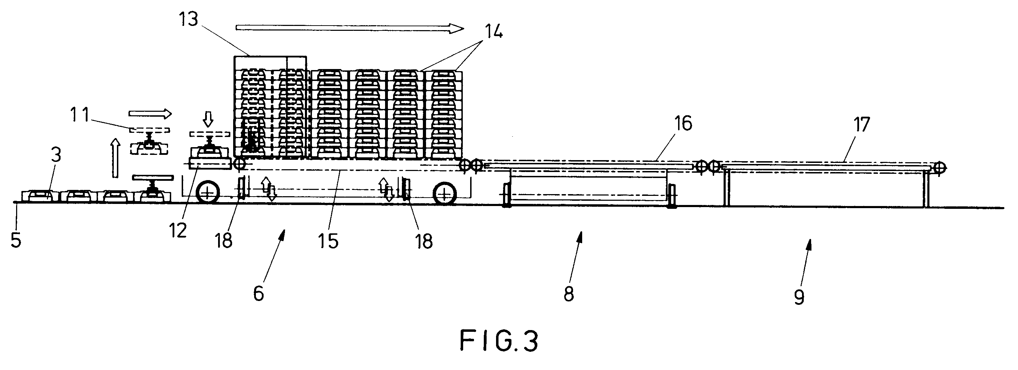

Fig. 3 is a side elevation of the set-out/pick-up carriage, the trolley and a discharge station; and
Fig. 4 is a top plan view of a trolley according to the invention.

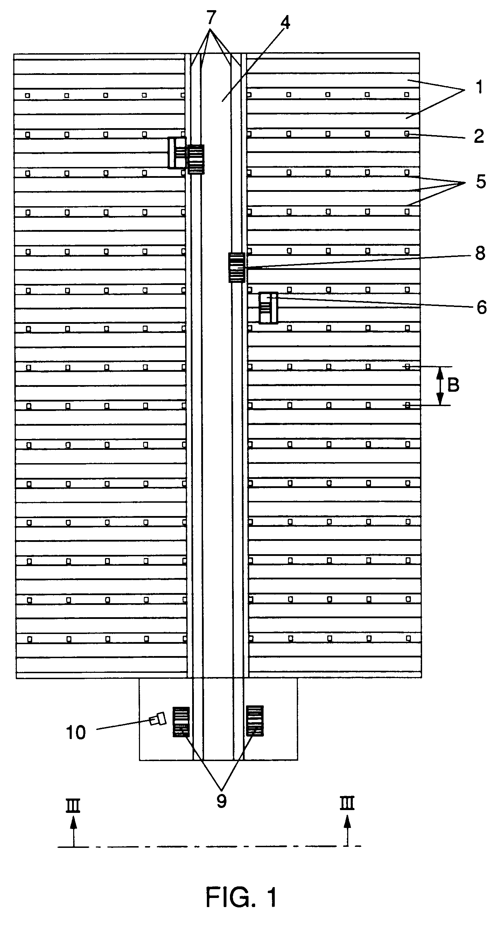

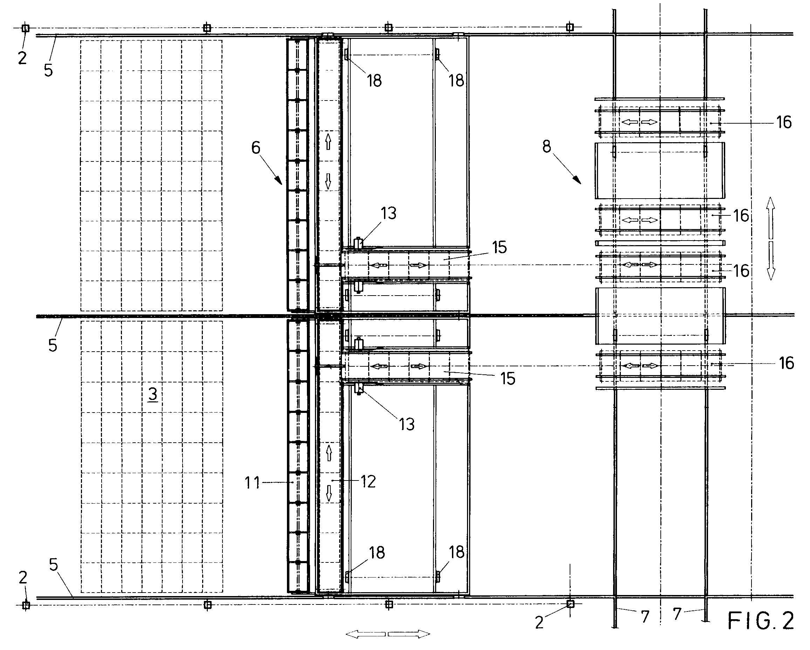

As shown in Fig. 1, a greenhouse is generally built up from a plurality of so-called "bays" 1, i.e., roof sections which are laterally supported by columns 2 in the greenhouse. The width B of the bays can for instance be 12.80 m. The floor area under one bay is referred to as a field. Arranged in a field (see Fig. 2) are nursery cases 3 containing soil blocks with plants that have germinated in a climate-controlled cell. A field can contain nursery cases 3 of different lots. The term "lot" is understood to refer to a plurality of nursery cases containing the same kind of plants, of the same date. A greenhouse generally comprises at least one transverse gangway 4 allowing for instance forklift trucks to ride from bay to bay.

In a preferred embodiment of the apparatus according to the invention, three tracks 5, for instance rails, are located below each bay (see Fig. 1). The set-out/pick-up carriage 6 rides over these tracks. In this embodiment, four tracks 7, such as rails, are provided in the transverse gangway 4 of the greenhouse and two trolleys 8 move over them. At the end of the transverse gangway 4 of the greenhouse, next to the tracks 7, two transfer or discharge stations 9 are arranged on which the nursery cases 3 located on the trolley 8 can be placed. From this discharge station 9, the nursery cases 3 can be removed for further transport, for instance by means of a forklift truck 10.

In the embodiment shown, the set-out/pick-up carriage 6 is movable over the tracks 5 and comprises a lifting frame 11 which is operative over a distance which is to be chosen equal to the full width or half the width of the bay B and is adapted to place cases 3 onto, and remove cases 3 from, cross conveyors 12 which have an overall operative length corresponding substantially to the width of the lifting frame and can transport cases to the, or each, stacking/unstacking machine 13. The set-out/pick-up carriage 6 can for instance start at a random row of a field and pick up a row of cases 3 by means of the lifting frame 11 and place them on the cross conveyor 12. These cases 3 are then carried to the, or each, stacking/unstacking machine 13 and stacked there. As soon as a desired number of cases 3 have been picked up, with one row located on the cross conveyors 12 and one row located in the lifting frame 11, the set-out/pick-up carriage 6 can be driven over the longitudinal rails 5 to the transverse gangway 4 in the greenhouse where the stacks 14 can be delivered. As the set-out/pick-up carriage 6 rides, the cases 3 located on the cross conveyors 12 can be stacked and the cases in the lifting frame 11 can be placed on the cross conveyors 12 and subsequently stacked on conveyors 15 which are likewise mounted on the set-out/pick-up carriage 6 and which are perpendicular to the cross conveyor 12. Therefore, no service time of the set-out/pick-up carriage 6 is lost and the system is eminently suitable for very large greenhouses having field areas of 7 hectares, for instance.

Although it is possible to unload the stacks 14 thus formed from the set-out/pick-up carriage at the transverse gangway 4 by hand or with a lift truck, it is recommended, in view of automation and capacity increase, and in accordance with the invention, to use a track 7 for a trolley 8 at at least one transverse gangway 4. This trolley 8, comprising conveyors 16 connecting to the conveyors 15 of the set-out/pick-up carriage 6, can receive or transfer the stacks 14 which have been formed on the conveyors 15 of the set-out/pick-up carriage 6. This enables the set-out/pick-up carriage 6 to rapidly discharge the stacks 14 formed thereon and ride back into the field, while the trolley 8 removes the load of stacked cases.

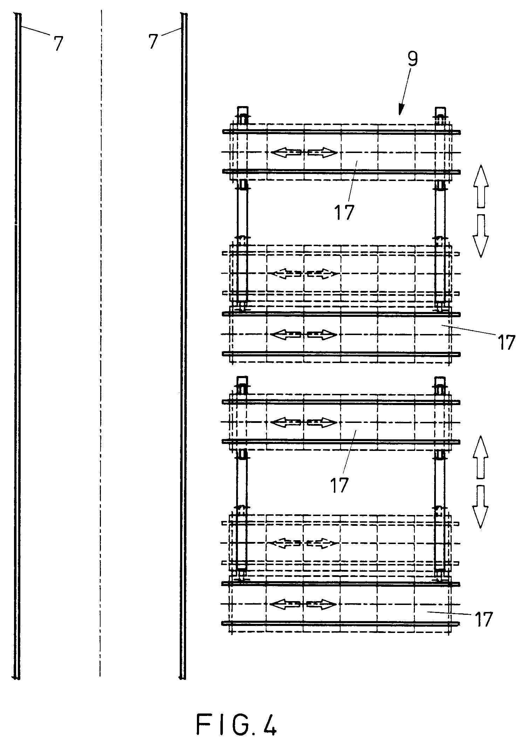

Further, according to the invention, use can be made of a stationary transfer station 9 which comprises a device for moving the rows of stacks towards each other so that they can be picked up by a transport clamp, which is known as such, and the transfer station 9 may connect to a discharge transport device comprising trolleys which are movable over rails and are designed and equipped in substantially the same manner as the trolley 8 operative directly behind the set-out/pick-up carriage 6. The stacks can thus be formed and removed in a fully automatic manner. In the example a very simple design of such a discharge transport device is shown. The example shows only two transfer stations 9 on which the stacks 14 which are located on the trolley 8 can be placed. The transfer stations 9 (see Fig. 4) are fixed to the ground and comprise conveyors 17 which connect to the conveyors 16 of the trolleys 8. The conveyors 17 are movable in transverse direction and can move the rows of stacks towards each other so that they can be properly picked up by transport clamps, which are known per se. From these discharge stations 9, the stacks of cases 14 can be removed, for instance by means of a forklift truck 10, for further transport, for instance to a truck terminal.

By means of wheels 18, the set-out/pick-up carriage 6 can be transported transverse to the direction of the tracks 5 via the transverse gangway 4 to another bay.

It will be clear that the invention is not limited to the embodiment described and various modifications are possible within the framework of the invention. Essential is that, according to the invention, batches of nursery cases can be picked up from the centre of a field or be set out therein, that the cases are stacked or unstacked on site, both during the pick-up operation and during the ride of the carriage, and that the apparatus according to the invention can efficiently process large numbers of nursery cases, which will lead to considerable savings in nurseries.

## Claims

1. An apparatus for the mechanical handling of nursery cases in a greenhouse, comprising at least one set-out/pick-up carriage (6) which is movable over one or more tracks such as rails (5) below a bay (1) of a greenhouse, said carriage (6) comprising at least one stacking/unstacking machine (13) and a lifting frame (11) which is operative over a distance to be chosen equal to the full width or half the width (B) of a bay, said lifting frame (11) being adapted to place cases on, and remove cases from, a cross conveyor (12) which is mounted on the set-out/pick-up carriage (6) and has a length substantially corresponding to the length of the lifting frame, said cross conveyor (12) being adapted to transport cases from and to the, or each, stacking/unstacking machine (13).

2. An apparatus according to claim 1, characterized in that three tracks (5) are provided below each greenhouse bay (1), the set-out/pick-up carriage (6) at the central track comprising two stacking/unstacking machines (13) which are supplied by the cross conveyor or conveyors (12) and the lateral tracks serving to support ends of the cross conveyors (12) and of the lifting frame (11).

3. An apparatus according to claim 1 or 2, characterized in that the set-out/pick-up carriage (6) thereof comprises conveyors (15) which extend substantially perpendicularly to the cross conveyor and on which the stacking/unstacking machine (13) can stack the cases presented and shove the finished stacks into line.

4. An apparatus according to any one of the preceding claims, characterized in that the conveyors (15) of the set-out/pick-up carriage (6) on which the stacks of nursery cases are located connect to the conveyors (16) of a trolley (8) which can move over tracks (7) in a transverse gangway (4) of the greenhouse.

5. An apparatus according to any one of the preceding claims, characterized in that it comprises a discharge transport system for discharging stacks of nursery cases.

6. An apparatus according to claims 4 and 5, characterized in that the conveyors (16) of the trolley (8) connect to the transport means of the discharge system.

7. An apparatus according to any one of the preceding claims, characterized in that the set-out/pick-up carriage (6) thereof comprises transverse transport means (18) by means of which the set-out/pick-up carriage (6) can be displaced transversely to the direction of the tracks (5) via the transverse gangway (4) to another bay.

8. A method for depositing (setting out) nursery cases supplied in stacks side by side in a greenhouse on the floor thereof, or for picking up cases thus set out, stacking and subsequent discharge thereof, wherein, for setting out cases supplied in stacks, the cases are unstacked mechanically and formed into a row having a length corresponding to the full width or half the width of a greenhouse bay, the row thus formed being picked up in its entirety by a lifting frame which places the row in its entirety on the ground, in aligment with a previously placed row, and wherein, for picking up cases, the lifting frame in each case grips a row of cases and places them on the cross conveyor, the cross conveyor supplying the cases to at least one stacking machine, the stacks formed being subsequently removed.

9. A method according to claim 8, characterized in that the stacks are supplied and discharged by transfer to a trolley that is movable over transverse tracks.

10. A method according to claim 9, characterized in that the trolley feeds the stacks to a transfer or discharge station which discharges the stacks to a terminal.

FIG. 1

FIG. 2

EP 0 511 715 A1

FIG.3

EP 0 511 715 A1

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | TUINDERIJ. vol. 69, no. 20, 28 September 1989, DOETINCHEM NL page 6; 'ROBOT IN ACTIE'<br>--- | 1,5,8 | A01G9/14 |
| A | WO-A-9 006 273 (NEKALAN KONEPAJA OY) * page 4, line 1 - page 6, line 30; figure 1 *<br>--- | 1 | |
| A | NL-A-8 700 172 (LEENDERTSE AGRISYSTEMS) * page 3, line 3 - page 11, line 13; figures 1-10 *<br>----- | 1,8 | |

TECHNICAL FIELDS SEARCHED (Int. Cl.5 )

A01G
B65G

The present search report has been drawn up for all claims

| Place of search | Date of completion of the search | Examiner |
|---|---|---|
| THE HAGUE | 05 AUGUST 1992 | HERYGERS J.J. |